# EUROPÄISCHE PATENTSCHRIFT

(11) **EP 4 185 501 B1**
(45) Veröffentlichungstag und Bekanntmachung des Hinweises auf die Patenterteilung: **06.03.2024**
(21) Anmeldenummer: 21743062.8
(22) Anmeldetag: 29.06.2021
(51) Int. Cl.: B60T 17/22, B60T 8/32, F16C 19/52

(54) **RADKOPFÜBERWACHUNGSEINHEIT UND VERFAHREN ZUM ERFASSEN EINER FEHLFUNKTION EINES RADKOPFS**
WHEEL-HEAD MONITORING UNIT AND METHOD FOR DETECTING A MALFUNCTION OF A WHEEL HEAD
UNITÉ DE SURVEILLANCE DE TÊTE DE ROUE ET PROCÉDÉ DE DÉTECTION D'UN DYSFONCTIONNEMENT D'UNE TÊTE DE ROUE

(30) Priorität: 24.07.2020 DE 102020119573
(43) Veröffentlichungstag der Anmeldung: 31.05.2023
(73) Patentinhaber: SAF-HOLLAND GmbH, 63856 Bessenbach (DE)
(72) Erfinder: BRUNSCH, Bernd, 63303 Dreieich (DE)
(74) Vertreter: Müller Schupfner & Partner Patent- und Rechtsanwaltspartnerschaft mbB
(86) Internationale Anmeldenummer: PCT/EP2021/067801
(87) Internationale Veröffentlichungsnummer: WO 2022/017736

(56) Entgegenhaltungen:
- EP-A2- 1 281 950
- WO-A1-2009/070064
- WO-A1-2009/070067
- WO-A1-2020/028598
- RU-C1- 2 549 601

## Beschreibung

Die Erfindung betrifft eine Radkopfüberwachungseinheit sowie ein Verfahren zum Erfassen einer Fehlfunktion eines Radkopfs, jeweils insbesondere für Nutzfahrzeuge.

Radköpfe von Achsen und Wellen sind bereits aus dem Stand der Technik bekannt und dienen dazu, ein Rad gegenüber einer Welle und/oder einer Achse zu lagern und/oder ein Rad gegenüber der Achse oder der Welle zu bremsen. Die einzelnen Komponenten der Radköpfe, wie unter anderem die Räder, die Radlager oder die Bremsen, können jedoch beispielsweise Fehlfunktionen, insbesondere verschleißbedingte Fehlfunktionen, mit der Zeit aufweisen. Diese Fehlfunktionen sollten dabei möglichst frühzeitig erkannt werden, um mögliche Folgeschäden zu vermeiden. Es ist dabei beispielsweise bekannt, mit einem Verschleißsensor das Erreichen der Verschleißgrenze von Bremsbelägen zu erkennen. Diese Art der frühzeitigen Erkennung erfordert jedoch die exakte Erfassung einer vorher festgelegten Größe und einen Vergleich mit genau bekannten Schwellenwerten, sodass eine genaue Erfassung der Messgröße nötig ist, um eine Fehlfunktion des Radkopfs zu erkennen.

Die WO 2009/070067 A1 betrifft ein Verfahren zur Identifikation von einem oder mehreren Modulen eines Apparates.

Auch die WO 2009/070064 A1 betrifft ein Verfahren zur Lokation eines Moduls an einem Apparat.

Die WO 2020/038598 A1 betrifft ein Hochtemperaturwarnsystem für einen Radkopf.

Die RU 2 549 601 C1 betrifft ein Verfahren zur Kontrolle des Strukturzustands eines Flugzeugs und Vorrichtung zu diesem Zweck.

Die EP 1 281 950 A2 betrifft ein Überwachungs- und Warnsystem für Reifen und Radaufhängungen

Die WO 01/45993 A1 betrifft eine Lagerzustandsüberwachung und -steuerung. Es ist daher Aufgabe der vorliegenden Erfindung, eine besonders robuste Art der Bestimmung von Fehlfunktionen bei Radköpfen zu erreichen, auch ohne dass vorbekannte Schwellenwerte genau bekannt sein müssen.

Diese Aufgabe wird mit einer Radkopfüberwachungseinheit gemäß dem Anspruch 1 und mit einem Verfahren gemäß dem Anspruch 9 gelöst. Weitere Vorteile, Ausführungsformen und Merkmale ergeben sich aus den Unteransprüchen, der Beschreibung sowie aus den Figuren.

Erfindungsgemäß umfasst eine Radkopfüberwachungseinheit eine erste Sensoreinheit, eine zweite Sensoreinheit und eine Auswerteinheit, wobei die erste Sensoreinheit zumindest einen ersten Messwert eines ersten Radkopfs erfasst und/oder dazu ausgelegt ist, zu erfassen, wobei die zweite Sensoreinheit einen zweiten Messwert eines zweiten Radkopfs erfasst und/oder dazu ausgelegt ist, zu erfassen, wobei die Auswerteeinheit dazu ausgelegt ist, den ersten Messwert mit dem zweiten Messwert und/oder den ersten Messwert mit einem vorhergesagten ersten Messwert und/oder deren zeitliche Ableitungen und/oder deren Integrationen über die Zeit zu vergleichen, wobei die Auswerteinheit insbesondere dazu ausgelegt ist, ein Signal auszugeben und/oder zu speichern, wenn die Differenz des ersten Messwerts zu dem zweiten Messwert und/oder des ersten Messwerts zu dem vorhergesagten ersten Messwert einen Schwellwert überschreitet. Die erfindungsgemäße Radkopfüberwachungseinheit dient in anderen Worten dazu, die Komponenten eines Radkopfs zu überwachen und/oder deren Fehlfunktion zu erkennen. Die Radkopfüberwachungseinheit ist dabei insbesondere eine Nutzfahrzeugradkopfüberwachungseinheit. Die Radkopfüberwachungseinheit überwacht somit zweckmäßigerweise die Radköpfe eines Nutzfahrzeugs. Die Erfindung kann daher auch ein Nutzfahrzeug mit einer Radkopfüberwachungseinheit betreffen. Ein Nutzfahrzeug im Sinne der Erfindung ist dabei insbesondere ein, vorzugweise straßentaugliches und/oder straßengebundenes, Zugfahrzeug oder ein Anhänger mit einer zulässigen Gesamtmasse von über 3,5 Tonnen, bevorzugt über 7,5 Tonnen und besonders bevorzugt über 15 Tonnen. Die erfindungsgemäßen Radköpfe bilden dabei insbesondere die radial nach außen weisenden Bestandteile einer Achsen- oder einer Welleneinheit aus und dienen insbesondere dazu, ein Rad des Radkopfs abzustützen und/oder zu bremsen. In anderen Worten umfassen die erfindungsgemäßen Radköpfe daher insbesondere unter anderem die Bremsanlage, die Radnaben, die abzustützenden Räder und/oder die Lagereinheiten einer Achse oder einer Welle. Eine derartige Achse beziehungsweise Welle weist dabei meist an den gegenüberliegenden Enden jeweils einen ersten und einen zweiten Radkopf auf. Es weist somit meist jede Achse eines Fahrzeugs einen linken und einen rechten Radkopf auf. Die erfindungsgemäße Radkopfüberwachungseinheit verfügt über eine erste Sensoreinheit und eine zweite Sensoreinheit. Hierbei ist die erste Sensoreinheit dazu ausgelegt, einen ersten Messwert eines ersten Radkopfs zu erfassen und die zweite Sensoreinheit ist dazu ausgelegt, einen zweiten Messwert eines zweiten Radkopfs zu erfassen. In anderen Worten kann dies bedeuten, dass beispielsweise die erste Sensoreinheit dazu dient, einen Messwert eines linken Radkopfs einer Achse und die zweite Sensoreinheit ein Messwert eines rechten Radkopfs dieser Achse zu erfassen. Vorteilhafterweise sind dabei der erste Messwert und der zweite Messwert identisch zueinander. Unter identisch ist insbesondere zu verstehen, dass der erste Messwert und der zweite Messwert jeweils die gleiche physikalische Größe der gleichen Einheit bzw. des gleichen Bauteils des jeweiligen Radkopfs jeweils am ersten Radkopf bzw. am zweiten Radkopf repräsentieren. Daher kann beispielsweise die erste Sensoreinheit dazu ausgelegt sein, eine Bremstemperatur des ersten Radkopfs zu erfassen und die zweite Sensoreinheit dazu ausgelegt sein, eine Bremstemperatur des zweiten Radkopfs zu erfassen. Durch diese Erfassung identischer Messwerte, welche durch die erste Sensoreinheit und die zweite Sensoreinheit erfasst werden, kann eine Vergleichbarkeit der beiden Messwerte erreicht werden. Die erste Sensoreinheit und die zweite Sensoreinheit können dabei mehrere verschiedene Sensoren aufweisen, welche jeweils dazu ausgelegt sind, unterschiedliche physikalische Größen und/oder Eigenschaften des ersten Radkopfs und/oder des zweiten Radkopfs zu erfassen, insbesondere auch von unterschiedlichen Elementen und/oder Bauteilen des jeweiligen Radkopfs. Eine Sensoreinheit kann aus mehreren unterschiedlichen Sensoren bestehen. Diese Sensoren können dabei an unterschiedlichen Orten und/oder Elementen des Radkopfs angeordnet sein und/oder sämtlich oder teilweise in einem Gehäuse enthalten sein. Die erste Sensoreinheit und/oder die zweite Sensoreinheit kann einen integralen Sensor umfassen, welcher dazu ausgelegt ist, mehrere physikalische Größen zu erfassen. Vorteilhafterweise ist die Radkopfüberwachungseinheit dabei derart ausgebildet, dass jeder Radkopf des Nutzfahrzeugs eine eigene Sensoreinheit aufweist. Dies kann bedeuten, dass die Radkopfüberwachungseinheit nicht nur eine erste Sensoreinheit und eine zweite Sensoreinheit aufweist, sondern eine Vielzahl von Sensoreinheiten, welche jeweils einem entsprechendem Radkopf zugeordnet sind und/oder im Bereich des jeweiligen Radkopfs angeordnet sind. Unter zugeordnet ist dabei in diesem Zusammenhang zu verstehen, dass die jeweilige Sensoreinheit dazu ausgelegt ist, physikalische Messgrößen des jeweilig zugeordneten Radkopfs zu erfassen und/oder zu Bestimmen. Neben den Sensoreinheiten verfügt die erfindungsgemäße Radkopfüberwachungseinheit auch über eine Auswerteeinheit. Diese Auswerteeinheit ist dabei dazu ausgelegt und/oder derart ausgestaltet, den ersten Messwert mit dem zweiten Messwert zu vergleichen und/oder den ersten Messwert mit einem vorhergesagten Messwert zu vergleichen. Dieser Vergleich der Messwerte beziehungsweise des Messwerts mit einem vorhergesagten Messwert kann dabei nicht nur den Messwert selbst erfassen, sondern auch dahingehend ausgebildet sein, dass nicht die Messwerte sondern die zeitlichen Ableitungen der Messwerte verglichen werden. Dies kann bedeuten, dass die Auswerteeinheit nicht nur dazu dienen kann, Messwerte selbst zu vergleichen, sondern alternativ oder zusätzlich bevorzugt kann die Auswerteinheit auch derart ausgestaltet sein, dass zeitliche Ableitungen und/oder zeitliche Integrationen der Messwerte durch die Auswerteinheit bestimmt werden können. Wie bereits dargelegt kann die Auswerteeinheit nicht nur einzelne Messwerte miteinander vergleichen, sondern alternativ und/oder zusätzlich bevorzugt kann die Auswerteinheit auch derart ausgestaltet sein, dass der erste Messwert und/oder der zweite Messwert mit einem vorhergesagten entsprechenden Messwert verglichen werden kann. In anderen Worten kann die Auswerteeinheit daher nicht nur bereits erfasste Messwerte miteinander vergleichen sondern auch feststellen, dass ein bestimmter vorhergesagter Messwert nicht erreicht und/oder überschritten wird. Ein derartiger vorhergesagter erster Messwert und/oder zweiter Messwert kann beispielsweise dadurch erhalten werden, dass aufgrund des anliegenden Bremsdrucks und/oder der vorhandenen Geschwindigkeit des Fahrzeugs und/oder der Drehzahl des Rades des Radkopfs eine gewisse Bremstemperatur eintreten müsste. Diese vorhergesagte Bremstemperatur kann dabei beispielsweise über vorher erfasste Messwerte und Erfahrungswerte vorhergesagt werden, insbesondere durch den Einsatz von neuronalen Netzen. Sollte der zu erwartende beziehungsweise vorhergesagte Messwert, beispielsweise die Bremstemperatur, nicht mit dem ersten erfassten tatsächlichen Messwert übereinstimmt, so kann über die Radkopfüberwachungseinheit eine Fehlfunktion des Radkopfs erfasst bzw. bestimmt werden. Die Auswerteeinheit ist dabei insbesondere derart ausgelegt, dass diese ein Signal ausgibt und/oder speichert, wenn die Differenz des ersten Messwerts zu dem zweiten Messwert und/oder wenn die Differenz des ersten Messwerts zu dem vorhergesagten (ersten) Messwert einen Schwellwert überschreitet. In anderen Worten kann die Auswerteeinheit derart beschaffen sein, dass diese eine Warnung bzw. ein Warnungssignal speichert und/oder ausgibt, wenn die Differenz zwischen dem ersten und dem zweiten Messwert und/oder zwischen dem ersten Messwert und dem zu erwartenden bzw. vorhergesagten Messwert eine gewisse Größe überschreitet und/oder unterschreitet. Beispielsweise kann diese Differenz dabei 10 Prozent, 20 Prozent oder 30 Prozent des zu erwartenden oder des erfassten ersten Messwerts betragen. In anderen Worten ist die Radkopfüberwachungseinheit beziehungsweise dessen Auswerteeinheit derart ausgelegt, dass erst bei einem Überschreiten einer über der Messtoleranz liegenden Differenz eine Warnung ausgegeben und/oder gespeichert wird. Durch die erfindungsgemäße Überwachungseinheit ist es in einfacher Weise möglich, einfach und zuverlässig eine Fehlfunktion eines Radkopfs und/oder von Elementen des Radkopfs zu detektieren, ohne auf, insbesondere statische und/oder vorbekannte, Schwellwerte zurückgreifen zu müssen. Daher ist die erfindungsgemäße Radkopfüberwachungseinheit deutlich unanfälliger gegenüber dynamisch wechselnden Bedingungen, wie z.B. Umwelteinflüssen und/oder Umgebungstemperaturen.

Zweckmäßigerweise ist/sind die erste Sensoreinheit und/oder die zweite Sensoreinheit dazu ausgelegt, eine Vielzahl von Messgrößen zu erfassen. In anderen Worten kann die Radkopfüberwachungseinheit bzw. die erste Sensoreinheit und/oder die zweite Sensoreinheit dazu ausgelegt sein, verschiedenartige Messgrößen zu erfassen. Diese Messgrößen können dabei die Temperatur, insbesondere einer Bremse des jeweiligen Radkopfs, der anliegende Bremsdruck, die Drehzahl des Rades des jeweiligen Radkopfs, die vorhandene Stützlast des Rades und/oder die vorhandene Schwingungsfrequenz und/oder -amplitude des Radkopfs sein. Vorteilhafterweise ist dabei die erste und die zweite Sensoreinheit derart ausgelegt, dass diese identische Messwerte am ersten bzw. zweiten Radkopf erfassen. In anderen Worten kann dies bedeuten, dass die erste und die zweite Sensoreinheit jeweils identische Werte bzw. Messgrößen jeweils an unterschiedlichen Radköpfen erfassen. Durch die Bestimmung von einer Vielzahl von Messgrößen am ersten Radkopf und/oder am zweiten Radkopf durch die erste bzw. durch die zweite Sensoreinheit kann das Spektrum der zu überwachenden Komponenten bzw. die Genauigkeit der Bestimmung einer Fehlfunktion des ersten oder des zweiten Radkopfs gesteigert werden.

Bevorzugt sind die erste Sensoreinheit und/oder die zweite Sensoreinheit dazu ausgelegt, eine Temperatur, insbesondere einer Bremse, einer Bremsscheibe und/oder von Bremsbelegen des ersten und/oder des zweiten Radkopfs zu erfassen. In anderen Worten kann daher die erste Sensoreinheit und/oder die zweite Sensoreinheit zumindest einen Temperatursensor umfassen. Die Bestimmung einer Temperatur kann dabei in vielfältiger Weise auf eine Fehlfunktion hindeuten. Insbesondere kann durch eine fehlende Steigerung der Temperatur bei einer Bremsung darauf rückgeschlossen werden, dass die Bremse selbst nicht die erforderliche Dissipationsleistung erbringen kann. Daher kann durch die Überwachung der Temperatur, insbesondere einer Bremse, bzw. der Komponenten der Bremsen in zuverlässiger Weise eine Fehlfunktion der Bremsanlage detektiert werden. Somit kann durch eine derartige Ausgestaltung der Radkopfüberwachungseinheit die Betriebseinheit eines Fahrzeugs, insbesondere eines Nutzfahrzeugs, deutlich gesteigert werden.

Zweckmäßigerweise sind die erste Sensoreinheit und/oder die zweite Sensoreinheit dazu ausgelegt, eine Temperatur eines Lagers, insbesondere eines Radlagers, des ersten und/oder des zweiten Radkopfs zu erfassen. Durch die Bestimmung der Temperatur eines Lagers, insbesondere eines Radlagers, des ersten und/oder des zweiten Radkopfs kann in sicherer Weise eine Fehlfunktion bzw. eine Schädigung des Lagers detektiert werden. Hierdurch können insbesondere drohende Ausfälle des Fahrzeugs durch die Radkopfüberwachungseinheit frühzeitig erkannt werden. Vorteilhafterweise ist dabei zumindest ein überwachtes Lager ein Radlager des jeweiligen Radkopfs.

Vorteilhafterweise ist/sind die erste Sensoreinheit und/oder die zweite Sensoreinheit dazu ausgelegt, zumindest einen Betriebszustandskennwert eines Hilfsantriebs des ersten und/oder des zweiten Radkopfs zu erfassen. In anderen Worten kann daher der erste und/oder der zweite Radkopf einen Hilfsantrieb, insbesondere einen hydraulischen oder einen elektrischen Hilfsantrieb, aufweisen. Ein Betriebszustandskennwert ist insbesondere ein Wert, der einen Betriebszustand des jeweiligen Hilfsantriebs charakterisiert. Beispielsweise kann bei einem hydraulischen Hilfsantrieb ein Betriebszustandskennwert ein Druck und/oder ein Durchflussvolumen von oder zum Hilfsantrieb sein. Bei einem elektrischen Hilfsantrieb kann ein Betriebszustandskennwert beispielsweise eine über den Antrieb abfallende Spannung und/oder die durch den Antrieb fließende Stromstärke sein. Durch die Überwachung des Hilfsantriebs kann in einfacher Weise zuverlässig eine Fehlfunktion des Antriebs erkannt werden.

Bevorzugt ist/sind die erste Sensoreinheit und/oder die zweite Sensoreinheit dazu ausgelegt, eine Drehzahl des Rades, insbesondere eines Rades einer Liftachse, des ersten und/oder des zweiten Radkopfs zu erfassen. Durch die Erfassung der Drehzahl kann beispielsweise ein geplatzter Reifen eines Radkopfes in effektiver Weise erfasst und/oder bestimmt werden. Sollte es sich bei dem Rad, dessen Drehzahl erfasst wird, um ein Rad an einer Liftachse handeln, so kann die Radkopfüberwachungseinheit dazu dienen, das Auslaufverhalten dieses Rades bei einem bodenlosen Kontakt dazu zu nutzen, eine Fehlfunktion, insbesondere eines Radlagers, des jeweiligen Radkopfs festzustellen. Darüber hinaus kann durch die Bestimmung der Drehzahl, insbesondere bei Liftachsen, nicht nur Rückschlüsse auf das Lager gezogen werden, sondern auch beispielsweise festsetzende Bremssattel können in einfacherweise über eine derart ausgebildete Radkopfüberwachungseinheit detektiert werden.

Vorteilhafterweise umfasst die Radkopfüberwachungseinheit eine Vielzahl von Sensoreinheiten, insbesondere vier, sechs oder acht, wobei jede Sensoreinheit zumindest einen Messwert eines jeweiligen Radkopfs erfasst und/oder dazu ausgelegt ist, zu erfassen. In anderen Worten kann die Radkopfüberwachungseinheit nicht nur zwei Radköpfen überwachen, sondern vielmehr ist es vorteilhaft, jeglichen Radkopf eines Nutzfahrzeugs jeweils mit einer eigenen Sensoreinheit auszurüsten. Vorteilhafterweise sind dabei die Sensoreinheiten der Radköpfe gleich zueinander ausgebildet. In anderen Worten kann dies bedeuten, dass die Sensoreinheiten der jeweiligen Radköpfe derart ausgelegt sind, dass diese die gleichen physikalischen Größen an jedem Radkopf erfassen. Durch die Verwendung einer Vielzahl von Sensoreinheiten an jeweils unterschiedlichen Radköpfen kann die Zuverlässigkeit des Systems deutlich gesteigert werden. Darüber hinaus kann durch diese Vielzahl von Messwerten auch die Lokation der Fehlfunktion bestimmt werden, denn beispielsweise bei der Verwendung von nur zwei Radköpfen ist es zwar möglich eine Fehlfunktion zu detektieren, jedoch kann in einfacher Weise nicht klar detektiert werden, welche der beiden Messstellen eine Fehlfunktion aufweist. Sollten jedoch eine Vielzahl von Messstellen bzw. Radköpfen überwacht werden, so ist in deutlich einfacher Weise feststellbar, welcher der Radköpfe bzw. welches der Elemente der Radköpfe eine Fehlfunktion aufweist. Vorteilhafterweise ist dabei die Auswerteeinheit derart ausgebildet, dass diese nicht nur einzelne Messwerte und/oder Messwerte mit den entsprechenden vorhergesagten Messwerten vergleicht, sondern auch Mittelwerte aller Messwerte mit jeweils einzelnen Messwerten vergleichen kann. Hierdurch kann die Auslösung von Fehlidentifikationen von Fehlfunktionen reduziert werden.

Erfindungsgemäß umfasst die Radkopfüberwachungseinheit einen Umgebungstemperatursensor. Durch das Vorhandensein eines Umgebungstemperatursensors kann in besonders einfacher Weise eine bereits vorliegende Fehlfunktion einer Sensoreinheit identifiziert werden, sodass die Genauigkeit der Erkennung einer Fehlfunktion gesteigert werden kann und/oder eine Selbstüberwachung der Radkopfüberwachungseinheit durch den Umgebungstemperatursensor realisiert werden kann. Alternativ oder zusätzlich bevorzugt kann der Umgebungstemperatursensor auch dazu genutzt werden, einzelne Temperatursensoren der Sensoreinheiten der Radkopfüberwachungseinheit zu kalibrieren. In anderen Worten kann dies bedeuten, dass der Umgebungstemperatursensor unter anderem dazu genutzt werden kann, eine Drift eines Sensors zu eliminieren. Beispielsweise kann dies dadurch erreicht werden, dass die Kalibrierungskurve der Temperatursensoren der Radkopfüberwachungseinheit nach einem längeren Stillstand jeweils an den Umgebungstemperatursensor angepasst werden. Hierdurch kann eine deutlich genauere Überwachung durch die Radkopfüberwachungseinheit erreicht werden und/oder das Auslösen von Fehlidentifikationen von defekten Komponenten reduziert werden.

Zweckmäßigerweise umfasst die erste Sensoreinheit und/oder die zweite Sensoreinheit einen Schwingungssensor. Durch das Vorsehen eines Schwingungssensors kann in vielfältiger Weise eine Fehlfunktion einzelner Komponenten identifiziert werden. Beispielsweise kann dies dadurch erfolgen, dass sowohl ein Vergleich in Hinblick auf eine Differenz einer Frequenz und/oder einer Differenz einer Amplitude erfolgt. Beispielsweise kann hierdurch ein Lagerschaden durch die Zunahme von Vibrationen detektiert werden. Der Schwingungssensor ist vorteilhafterweise derart ausgelegt, dass dieser die Schwingungen in zu mindestens zwei senkrecht zueinander stehenden Raumrichtungen erfasst, sodass insbesondere eine Vielzahl von unterschiedlichen Moden der jeweiligen Radköpfe und/oder dessen Komponenten erfasst werden können. Ein weiterer Vorteil eines Schwingungssensors ist, dass Schwingungen an vielfältigen Orten des Radkopfs aufgenommen werden können, wobei die Ursache dieser Schwingung an deutlich anderen Orten ihren Ursprung haben können.

Vorteilhafterweise ist die Radkopfüberwachungseinheit eine Nutzfahrzeugradkopfüberwachungseinheit. In anderen Worten kann dies bedeuten, dass die Radkopfüberwachungseinheit an einem Nutzfahrzeug montiert ist und/oder dazu ausgelegt ist, an einem Nutzfahrzeug montiert zu sein. Besonders bevorzugt ist es, wenn es sich bei der Radkopfüberwachungseinheit um eine Anhängerradkopfübennrachungseinheit, insbesondere Sattelaufliegerradkopfüberwachungseinheit, handelt. Dies gilt insbesondere aufgrund des Umstandes, dass eine Fehlfunktion von Komponenten eines Radkopfs eines Anhängers, insbesondere eines Sattelaufliegers, häufig unerkannt bleibt und zu schweren Unfällen führen kann. Die erfindungsgemäße Radkopfüberwachungseinheit kann daher, insbesondere durch eine Montage an einem Nutzfahrzeug, vorteilhafterweise einem Sattelauflieger, dazu eingesetzt werden, die Betriebssicherheit von Nutzfahrzeugen, vorteilhafterweise Sattelaufliegern, zu steigern. In anderen Worten kann daher die Erfindung insbesondere auch einen Anhänger, insbesondere einen Sattelauflieger, mit einer wie vorgehend beschrieben und nachgehend beschriebenen Radkopfüberwachungseinheit betreffen.

Ein weiterer Aspekt der Erfindung betrifft ein Verfahren zum Erfassen einer Fehlfunktion eines Radkopfs, insbesondere unter Verwendung einer Radkopfüberwachungseinheit wie vorgehend und nachgehend beschrieben, umfassend die Schritte: Erfassen eines ersten Messwerts eines ersten Radkopfs; Erfassen eines zweiten Messwerts eines zweiten Radkopfs; Verglichen des ersten Messwerts mit dem zweiten Messwert. Alternativ oder zusätzlich bevorzugt kann der erste Messwert auch mit einem vorhergesagten Messwert verglichen werden. Durch das erfindungsgemäße Verfahren kann in einfacher Weise eine Fehlfunktion einzelner Komponenten bzw. von einzelnen Elementen eines Radkopfs identifiziert werden. Das erfindungsgemäße Verfahren kann dabei in entsprechender Weise wie vorgehend und nachfolgend beschrieben weiter gebildet sein und/oder die vorgehend und nachfolgend beschriebenen Merkmale in Hinblick auf die Radkopfüberwachungseinheit aufweisen.

Weitere Vorteile und Merkmale der vorliegenden Erfindung ergeben sich aus der nachfolgenden Beschreibung mit Bezug auf die Figuren. Einzelne Merkmale der dargestellten Ausführungsformen können dabei auch in anderen Ausführungsformen eingesetzt werden, sofern dies nicht ausdrücklich ausgeschlossen wurde. Es zeigen:
- Figur 1: eine Radkopfüberwachungseinheit;
- Figur 2: einen Vergleich eines ersten Messwerts mit einem zweiten Messwert, und
- Figur 3: eine weitere Radkopfüberwachungseinheit.

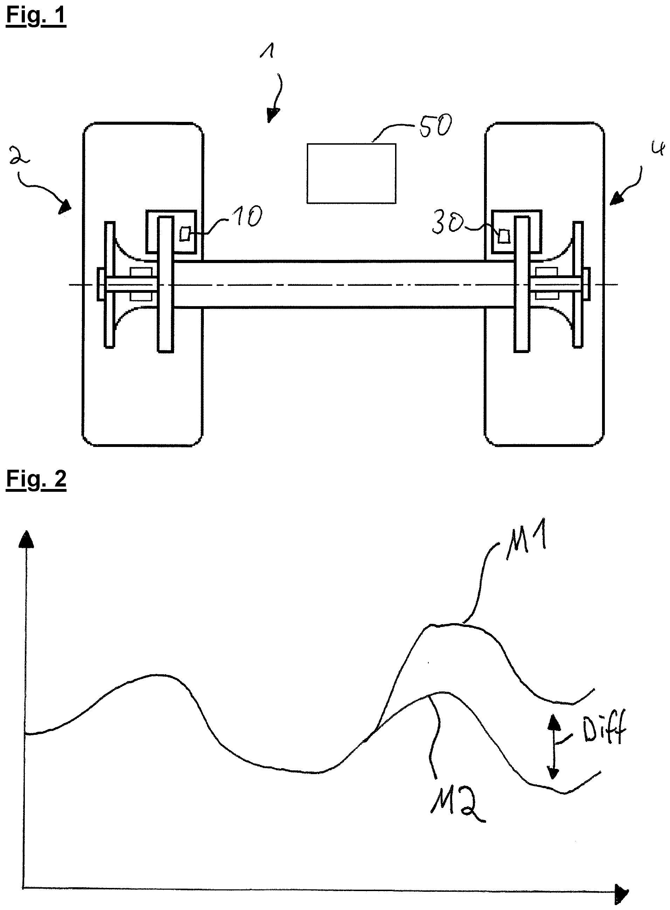

In **Figur 1** ist eine Radkopfüberwachungseinheit 1 gezeigt. Diese Radkopfüberwachungseinheit 1 dient dazu, einen ersten Radkopf 2 und einen zweiten Radkopf 4 einer Starrachse eines Nutzfahrzeugs zu überwachen. Die Radkopfüberwachungseinheit 1 weist eine erste Sensoreinheit 10 und eine zweite Sensoreinheit 30 auf, wobei die erste Sensoreinheit 10 in einer Bremsanlage des ersten Radkopfs 2 angeordnet ist. Die zweite Sensoreinheit 30 hingegen ist in einer Bremsanlage des zweiten Radkopfs 4 angeordnet. Die erste Sensoreinheit 10 und die zweite Sensoreinheit 30 sind informationstechnisch, insbesondere durch eine kabelgebundene oder bevorzugt über eine kabellose Verbindung, mit der Auswerteeinheit 50 verbunden. Die Auswerteeinheit 50 dient dazu, den ersten Messwert M1, welcher durch die erste Sensoreinheit 10 erfasst wird, mit dem zweiten Messwert M2, welcher durch die zweite Sensoreinheit 30 erfasst wird, zu vergleichen. Es kann dabei bevorzugt sein, wenn die Auswerteeinheit 50 in der ersten Sensoreinheit 10 und/oder der zweiten Sensoreinheit 30 inkludiert ist. Alternativ bevorzugt kann die Auswerteinheit 50 auch Teil eines bereits vorhandenen Systems sein, insbesondere beispielsweise eines ABS-Systems. Die Auswerteeinheit 50 kann dabei nicht nur den ersten Messwert M1 mit dem zweiten Messwert M2 vergleichen, sondern zusätzlich oder alternativ beispielsweise den ersten Messwert M1 mit einem vorhergesagten ersten Messwert vergleichen. Dieser Vergleich kann sich dabei auf die Messwerte selbst beziehen und/oder auf die zeitlichen Ableitungen der Messwerte und/oder die zeitliche Integration des Messwerts über die Zeit. In anderen Worten können auch die zeitlichen Ableitungen der Messwerte oder der integrale Wert der Messwerte miteinander verglichen werden.

In **Figur 2** ist ein zeitlicher Verlauf eines ersten Messwerts M1 mit einem zweiten Messwert M2 gezeigt. Wie in der Figur 2 ersichtlich weisen der erste Messwert M1 und der zweite Messwert M2 eine Differenz Diff ab einem gewissen Zeitpunkt zueinander auf, wobei diese Differenz Diff der Messwert M1 ,M2 einen Rückschluss auf eine Fehlfunktion eines Elements oder eines Bestandteils des ersten Radkopfs 2 oder des zweiten Radkopfs 4 indiziert.

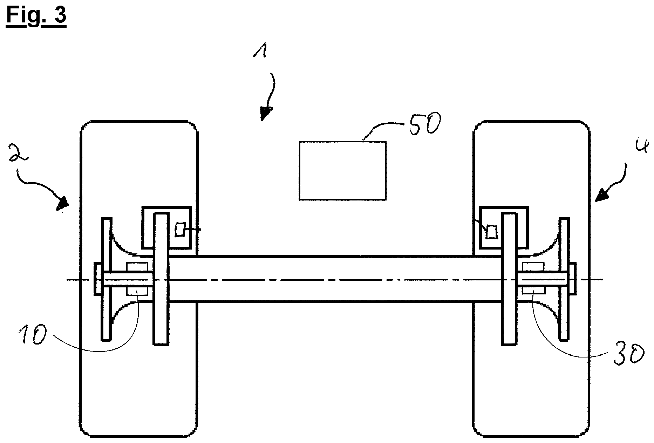

In **Figur 3** ist eine weitere Ausführungsform einer Radkopfüberwachungseinheit 1 gezeigt. Prinzipiell ist dabei die in Figur 3 gezeigte Ausführungsform mit der in Figur 1 gezeigten Variante kombinierbar. Die Radkopfüberwachungseinheit 1 dient dazu, einen ersten Radkopf 2 und einen zweiten Radkopf 4 einer Starrachse eines Nutzfahrzeugs, insbesondere eines Nutzfahrzeuganhängers, zu überwachen. Die Radkopfüberwachungseinheit 1 weist eine erste Sensoreinheit 10 und eine zweite Sensoreinheit 30 auf, wobei die erste Sensoreinheit 10 in einer Radlagereinheit des ersten Radkopfs 2 angeordnet ist. Die zweite Sensoreinheit 30 hingegen ist in einer Radlagereinheit des zweiten Radkopfs 4 angeordnet.

### Bezugszeichenliste:

- 1: - Radkopfüberwachungseinheit
- 2: - ersten Radkopf
- 4: - zweiter Radkopf
- 10: - erste Sensoreinheit
- 30: - zweiten Sensoreinheit
- 50: - Auswerteeinheit
- Diff: - Differenz des ersten Messwerts zum zweiten Messwert
- M 1: - erster Messwert
- M2: - zweiter Messwert

## Patentansprüche

1. Radkopfüberwachungseinheit (1), umfassend eine erste Sensoreinheit (10), eine zweiten Sensoreinheit (30) und eine Auswerteeinheit (50),
wobei die erste Sensoreinheit (10) zumindest einen ersten Messerwert (M1) eines ersten Radkopfs (2) erfasst und/oder dazu ausgelegt ist, zu erfassen, wobei die zweite Sensoreinheit (30) einen zweiten Messerwert (M2) eines zweiten Radkopfs (4) erfasst und/oder dazu ausgelegt ist, zu erfassen, **dadurch gekennzeichnet, dass** die Auswerteeinheit (50) dazu ausgelegt ist, den ersten Messwert (M1) mit dem zweiten Messwert (M2) und/oder deren zeitliche Ableitungen oder Integrationen zu vergleichen,
wobei die Auswerteeinheit (50) dazu ausgelegt ist, ein Signal auszugeben und/oder zu speichern, wenn die Differenz (Diff) des ersten Messwerts (M1) zu dem zweiten Messwert (M2) einen Schwellwert überschreitet,
wobei die Radkopfüberwachungseinheit (1) einen Umgebungstemperatursensor umfasst.

2. Radkopfüberwachungseinheit (1) gemäß einem der vorhergehenden Ansprüche,
wobei die erste Sensoreinheit (10) und/oder die zweite Sensoreinheit (30) dazu ausgelegt ist/sind, eine Vielzahl von Messgrößen zu erfassen.

3. Radkopfüberwachungseinheit (1) gemäß einem der vorhergehenden Ansprüche,
wobei die erste Sensoreinheit (10) und/oder die zweite Sensoreinheit (30) dazu ausgelegt ist/sind, eine Temperatur eines Bauteils des ersten und/oder des zweiten Radkopfs (2, 4) zu erfassen, insbesondere einer Bremse, einer Bremsscheibe und/oder von Bremsbelägen des ersten oder des zweiten Radkopfs (2, 4).

4. Radkopfüberwachungseinheit (1) gemäß einem der vorhergehenden Ansprüche,
wobei die erste Sensoreinheit (10) und/oder die zweite Sensoreinheit (30) dazu ausgelegt ist/sind, eine Temperatur eines Lagers, insbesondere eines Radlagers, des ersten und/oder des zweiten Radkopfs (2, 4) zu erfassen.

5. Radkopfüberwachungseinheit (1) gemäß einem der vorhergehenden Ansprüche,
wobei die erste Sensoreinheit (10) und/oder die zweite Sensoreinheit (30) dazu ausgelegt ist/sind, eine Drehzahl eines Rades, insbesondere eines Rades einer Liftachse, des ersten und/oder des zweiten Radkopfs (2, 4) zu erfassen.

6. Radkopfüberwachungseinheit (1) gemäß einem der vorhergehenden Ansprüche,
umfassend eine Vielzahl von Sensoreinheiten, insbesondere vier oder sechs, wobei jede Sensoreinheit zumindest einen Messerwert eines jeweiligen Radkopfs (2, 4) erfasst und/ oder dazu ausgelegt ist, zu erfassen.

7. Radkopfüberwachungseinheit (1) gemäß einem der vorhergehenden Ansprüche,
wobei die erste Sensoreinheit (10) und/oder die zweite Sensoreinheit (30) einen Schwingungssensor umfasst/en.

8. Radkopfüberwachungseinheit (1) gemäß einem der vorhergehenden Ansprüche,
wobei die Radkopfüberwachungseinheit (1) eine Nutzfahrzeugradkopfüberwachungseinheit ist.

9. Verfahren zum Erfassen einer Fehlfunktion eines Radkopfs (2, 4) unter Verwendung einer Radkopfüberwachungseinheit (1) gemäß einem der vorhergehenden Ansprüche,
umfassend die Schritte
- Erfassen eines ersten Messerwerts (M1) eines ersten Radkopfs (2),
- Erfassen eines zweiten Messerwerts (M2) eines zweiten Radkopfs (4),
- Vergleichen des ersten Messwerts (M1) mit dem zweiten Messwert (M2).

10. Nutzfahrzeug umfassend eine Radkopfüberwachungseinheit (1) gemäß einem der vorhergehenden Ansprüche 1 bis 8.

11. Nutzfahrzeug gemäß Anspruch 10, wobei das Nutzfahrzeug ein Nutzfahrzeuganhänger, insbesondere ein Sattelauflieger, ist.

## Claims

1. Wheel end monitoring unit (1), comprising a first sensor unit (10), a second sensor unit (30) and an evaluation unit (50),
wherein the first sensor unit (10) detects and/or is designed to detect at least a first measured value (M1) of a first wheel end (2),
wherein the second sensor unit (30) detects and/or is designed to detect a second measurement value (M2) of a second wheel head (4),
**characterised in that** the evaluation unit (50) is designed to the first measured value (M1) with the second measured value (M2) and/or their time derivatives or integrations,
wherein the evaluation unit (50) is designed to output and/or store a signal if the difference (Diff) between the first measured value (M1) and the second measured value (M2) exceeds a threshold value,
wherein the wheel head monitoring unit (1) comprises an ambient temperature sensor.

2. Wheel end monitoring unit (1) according to one of the preceding claims,
wherein the first sensor unit (10) and/or the second sensor unit (30) is/are designed to detect a plurality of measured variables.

3. Wheel end monitoring unit (1) according to one of the preceding claims,
wherein the first sensor unit (10) and/or the second sensor unit (30) is/are designed to detect a temperature of a component of the first and/or the second wheel end (2, 4), in particular of a brake, a brake disc and/or of brake linings of the first or the second wheel end (2, 4).

4. Wheel end monitoring unit (1) according to one of the preceding claims,
wherein the first sensor unit (10) and/or the second sensor unit (30) is/are designed to detect a temperature of a bearing, in particular a wheel bearing, of the first and/or the second wheel end (2, 4).

5. Wheel head monitoring unit (1) according to one of the preceding claims,
wherein the first sensor unit (10) and/or the second sensor unit (30) is/are designed to detect a rotational speed of a wheel, in particular a wheel of a lift axle, of the first and/or the second wheel head (2, 4).

6. Wheel head monitoring unit (1) according to one of the preceding claims,
wherein the first sensor unit (10) and/or the second sensor unit (30) comprises/comprises a vibration sensor.

7. Wheel head monitoring unit (1) according to one of the preceding claims,
wherein the first sensor unit (10) and/or the second sensor unit (30) comprises/comprises a vibration sensor.

8. A wheel end monitoring unit (1) according to any one of the preceding claims,
wherein the wheel end monitoring unit (1) is a commercial vehicle wheel end monitoring unit.

9. A method of detecting a malfunction of a wheel head (2, 4) using a wheel head monitoring unit (1) according to any one of the preceding claims, comprising the steps of
- detecting a first measurement value (M1) of a first wheel end (2),
- detecting a second measurement value (M2) of a second wheel end (4),
- comparing the first measured value (M1) with the second measured value (M2).

10. A commercial vehicle comprising a wheel end monitoring unit (1) according to any one of the preceding claims 1 to 8.

11. Commercial vehicle according to claim 10, wherein the commercial vehicle is a commercial vehicle trailer, in particular a semi-trailer.

## Revendications

1. Unité de surveillance de tête de support de roue (1), comprenant une première unité de capteur (10), une deuxième unité de capteur (30) et une unité d'évaluation (50),
la première unité de capteur (10) détectant et/ou étant conçue pour détecter au moins une première valeur de mesure (M1) d'une première tête de support de roue (2),
la deuxième unité de capteur (30) détectant et/ou étant conçue pour détecter une deuxième valeur de mesure (M2) d'une deuxième tête de support de roue (4),
**caractérisée en ce que**
l'unité d'évaluation (50) est conçue pour comparer la première valeur de mesure (M1) avec la deuxième valeur de mesure (M2) et/ou leurs dérivées ou intégrations dans le temps,
l'unité d'évaluation (50) étant conçue pour émettre et/ou mémoriser un signal lorsque la différence (Diff) entre la première valeur de mesure (M1) et la deuxième valeur de mesure (M2) dépasse une valeur seuil,
l'unité de surveillance de tête de support de roue (1) comprenant un capteur de température ambiante.

2. Unité de surveillance de tête de support de roue (1) selon la revendication précédente,
dans laquelle la première unité de capteur (10) et/ou la deuxième unité de capteur (30) est/sont conçue(s) pour détecter une pluralité de grandeurs de mesure.

3. Unité de surveillance de tête de support de roue (1) selon l'une des revendications précédentes,
dans laquelle la première unité de capteur (10) et/ou la deuxième unité de capteur (30) est/sont conçue(s) pour détecter une température d'un composant de la première et/ou de la deuxième tête de support de roue (2, 4), en particulier d'un frein, d'un disque de frein et/ou de garnitures de frein de la première ou de la deuxième tête de support de roue (2, 4).

4. Unité de surveillance de tête de support de roue (1) selon l'une des revendications précédentes,
dans laquelle la première unité de capteur (10) et/ou la deuxième unité de capteur (30) est/sont conçue(s) pour détecter une température d'un palier, en particulier d'un palier de roue, de la première et/ou de la deuxième tête de support de roue (2, 4).

5. Unité de surveillance de tête de support de roue (1) selon l'une des revendications précédentes,
dans laquelle la première unité de capteur (10) et/ou la deuxième unité de capteur (30) est/sont conçue(s) pour détecter une vitesse de rotation d'une roue, en particulier d'une roue d'un essieu relevable, de la première et/ou de la deuxième tête de support de roue (2, 4).

6. Unité de surveillance de tête de support de roue (1) selon l'une des revendications précédentes,
comprenant une pluralité d'unités de capteur, en particulier quatre ou six, chaque unité de capteur détectant et/ou étant conçue pour détecter au moins une valeur de mesure d'une tête de support de roue respective (2, 4).

7. Unité de surveillance de tête de support de roue (1) selon l'une des revendications précédentes,
dans laquelle la première unité de capteur (10) et/ou la deuxième unité de capteur (30) comporte(nt) un capteur de vibrations.

8. Unité de surveillance de tête de support de roue (1) selon l'une des revendications précédentes,
dans laquelle l'unité de surveillance de tête de support de roue (1) est une unité de surveillance de tête de support de roue d'un véhicule utilitaire.

9. Procédé de détection d'un dysfonctionnement d'une tête de support de roue (2, 4) en utilisant une unité de surveillance de tête de support de roue (1) selon l'une des revendications précédentes, comprenant les étapes consistant à
- détecter une première valeur de mesure (M1) d'une première tête de support de roue (2),
- détecter une deuxième valeur de mesure (M2) d'une deuxième tête de support de roue (4),
- comparer la première valeur de mesure (M1) avec la deuxième valeur de mesure (M2).

10. Véhicule utilitaire comprenant une unité de surveillance de tête de support de roue (1) selon l'une des revendications précédentes 1 à 9.

11. Véhicule utilitaire selon la revendication 10,
dans lequel le véhicule utilitaire est une remorque de véhicule utilitaire, en particulier une semi-remorque.
